# EUROPEAN PATENT SPECIFICATION

(11) **EP 3 019 331 B1**
(45) Date of publication and mention of the grant of the patent: **13.09.2017**
(21) Application number: 13737526.7
(22) Date of filing: 09.07.2013
(51) Int. Cl.: B29D 30/00

(54) **CARRIER FOR GREEN TYRES**
TRÄGER FÜR REIFENROHLINGE
SUPPORT POUR PNEUS CRUS

(43) Date of publication of application: 18.05.2016
(73) Proprietor: Güdel Group AG, 4900 Langenthal (CH); Georg Utz Holding AG, 5620 Bremgarten (AG) (CH)
(72) Inventor: SCHWAB, Boris, CH-5304 Endingen (CH); PERUCCA, Doriano, CH-4552 Derendingen (CH); MESSMER, Michael, CH-3172 Niederwangen (CH)
(74) Representative: Hoppler, Justin
(86) International application number: PCT/CH2013/000122
(87) International publication number: WO 2015/003277

(56) References cited:
- EP-A2- 0 767 051
- EP-A2- 1 818 164
- FR-A5- 2 063 847
- SU-A1- 795 963
- US-A- 3 759 394
- US-A- 4 252 241
- US-A- 4 472 125
- US-A- 4 637 644
- US-A1- 2008 308 433

## Description

### Technical Field

The invention relates to a carrier for a green tyre, comprising a supporting surface for supporting the green tyre, wherein the supporting surface is formed by at least two surface sections. The carrier further comprises a carrier structure which carries the supporting surface and at least one supporting element which includes a surface forming one of the at least two surface sections.

### Background Art

Carriers for green tyres with a supporting surface for supporting a green tyre are generally known. Such carriers may be arranged in a working orientation where the carrier's supporting surface faces upwards such that a green tyre may be placed on the supporting surface and held on the supporting surface by gravitational force. Thus, relative terms like "above", "up" "upper", "upwards", "higher", "below", "lower", "down", "vertical", "vertically", "horizontal" and "horizontally" that are used in the following refer to the carrier being arranged in this working orientation.

One example of a carrier for green tyres is described in EP 0 767 051 B1 (Sumitomoto Rubber Industries Ltd.). The supporting surface of this carrier comprises an inner surface section and an outer surface section. Both surface sections follow the shape of a cone without including the down facing tip of the cone. The outer surface section provides a flatter slope than the inner surface section and is connected to the inner surface section at the outer circumference of the inner surface section.

A disadvantage of this carrier is that a carried green tyre sticks to the carrier because there is a large contact area between the green tyre and the supporting surface of the carrier. This large contact area leads to a large sticking area and thus to a strong sticking of the green tyre to the carrier. A further disadvantage of this carrier is that the sticking of the green tyre may strongly vary from green tyre to green tyre and may further depend on external influences like for example temperature and humidity of the ambient air. Thus, it is very difficult to automate the handling of such carriers and green tyres.

US 4,252,241 (Ralph Trial) discloses a tire support stand for green tire carcasses which are adjustable over a wide range of tire sizes. The tire support stand has concentric relatively moveable truncated cone members with oppositely directed apexes. A first, upper truncated conical flange is affixed to a base bracket with its apex downwardly oriented. A second, lower truncated conical dome member is affixed to a threaded shaft which is journaled in a threaded tube which is affixed to the bracket. The second dome member is adjustable vertically to accommodate various inner diameters of the beads of uncured tires.

Another example of a carrier for green tyres is described in CN 102060044 A (Chengshan Group Co. Ltd.). The supporting surface of this carrier consists of two rings which are arranged concentrically with their rotational symmetric axes oriented vertically. One of these rings has a larger diameter than the other ring. The ring with the larger diameter is arranged at a slightly elevated position as compared to the ring with the smaller diameter such that a green tyre carried by the carrier is supported by both rings. Thus, the two rings form each a surface section of the carrier's supporting surface. These two surface sections are smaller than the surface sections of the carrier according to EP 0 767 051 B1 (Sumitomoto Rubber Industries Ltd.). Thus, the contact area between a green tyre and the carrier is smaller, too. As a consequence, a green tyre sticks less to the carrier according to CN 102060044 A (Chengshan Group Co. Ltd.) than to the carrier according to EP 0 767 051 B1 (Sumitomoto Rubber Industries Ltd.).
Even though the sticking problem is reduced by the carrier according to CN 102060044 A (Chengshan Group Co. Ltd.), this carrier has the disadvantage that the smaller surface sections lead to imprints or deformations of the green tyre which decreases the quality of the final tyre.

Document US 4637644 - A discloses a carrier for transporting green tires in a horizontal position without causing deformations, the carrier comprising a lower bead support, a concentric tire shoulder support and a set of fingers for supporting the upper bead of the tire.

### Summary of the invention

It is the object of the invention to create a carrier for green tyres pertaining to the technical field initially mentioned, that enables a removal of the green tyre from the carrier with less force and that prevents undesired deformations on the green tyre carried by the carrier.

The solution of the invention is specified by the features of claim 1.

Preferred embodiments of the invention are defined in the dependent claims.

According to the invention, the carrier is a pallet and the at least one supporting element with its surface section is moveable along a path relatively to the others of the at least two surface sections, wherein said path is oriented in an essentially vertical direction. This movability of the at least one supporting element with its surface section may be active or may be passive. This means, the carrier may comprise some means for actuating a movement of the at least one supporting element with its surface section relatively to the others of the at least two surface sections or may be constructed without any means for actuating this movement.
For the solution, the carrier structure may have any discretionary form. As initially mentioned, it is only important that the carrier structure carries the supporting surface and the at least one supporting element. Thus, the carrier structure may for example be a frame, a skeleton or have a flat, sheet-like shape. In another example, the carrier structure may be some filled body or some structure with empty spaces.

Similarly, the supporting surface may have any discretionary form. As initially mentioned, it is only important that the supporting surface is adapted for supporting a green tyre. Thus, the supporting surface may be a continuous surface or may comprise parts which are spatially separated from each other. Such separated parts may for example be defined by the at least two surface sections.

The effect of the at least one supporting element being movable is that the at least two surface sections can be arranged in different positions relative to each other. Depending on the particular arrangement of the at least two surface sections, a green tyre may touch a smaller or a larger number of surface sections. Consequently, the solution according to the invention has the advantage that an easier removal of a green tyre from the carrier is enabled since in at least one step, the number of surface sections that touch the carrier can be reduced before the complete removal of the green tyre. Thus, the surface area of the carrier sticking to the green tyre can be reduced in at least one step before the complete removal of the green tyre. This stepwise removal can be illustrated on a carrier which comprises two surface sections and one supporting element, where a first of the two surface sections is fixed to the carrier structure and a second of the two surface sections is located on and thus movable with the supporting element. If a green tyre is carried on this carrier, it may stick to both surface sections. Thus, if this green tyre is removed from the carrier, it is removed in a first step from the first surface section. During this first step, the second surface section remains sticking to the green tyre, such that the supporting element is moved together with the green tyre away from the first surface section. Subsequently, in a second step, the green tyre is removed from the second surface section and thus from the carrier. Consequently, the green tyre is removed in each step from one surface section. Since the sticking area of one surface section is less than the sticking area of the entire supporting surface, the force required per time to remove the green tyre from the carrier is reduced.

Advantageously, the carrier provides a carrying position where the at least two surface sections form an essentially continuous surface for supporting the green tyre. In this essentially continuous surface, there may be small or large gaps between the individual surface sections measured in the plain of the essentially continuous surface and there may be small steps between the individual surface sections measured perpendicular to the surfaces of the respective surface sections. Independent on whether there are gaps or small steps between the surface sections, the essentially continuous surface ensures that the carried green tyre may be in contact with all of the surface sections. This has the advantage that the green tyre carried by the carrier can be supported on a large surface area such that undesired deformations of the green tyre are prevented.

Alternatively, the carrier may not provide such a carrying position.

If the carrier provides a carrier position, then the carrier preferably comprises at least one removal position where the at least two surface sections form a discontinuous surface. If the carrier provides no carrier position, then the carrier preferably comprises at least two removal positions where the at least two surface sections form a discontinuous surface. This discontinuous surface has steps between at least two of the least two surface sections measured perpendicular to the surfaces of the surface sections such that a green tyre cannot touch all of the surface sections at the same time. The advantage of this one or more removal positions is that the surface area touched by a green tyre at the same time may be reduced from carrying position to removal position or from removal position to removal position. Thus, the sticking area of the green tyre may be reduced in one or more steps from the carrying position to one of the at least one removal position or from one removal position to another removal position. Consequently, the at least one or at least two removal positions have the advantage that the force required to remove the green tyre from the carrier is reduced.

Alternatively, the carrier may not provide such a removal position.

Advantageously, one or more of the at least one supporting element is movably mounted to the carrier structure. In a preferred variant, all of the at least one supporting element are movably mounted to the carrier structure. Either variant has the advantage that a movement of the at least one supporting element mounted to the carrier can be optimally controlled and guided.

In a preferred variant, one, more than one, or all of the at least one supporting element is movably attached to the carrier structure. This has the advantage that a movement of the at least one supporting element attached to the carrier can be optimally controlled and guided and that the movably attached supporting element cannot be removed unintentionally from the carrier. Consequently, the handling of the carrier is simplified.

Alternatively, none of the supporting elements may be movably mounted or movably attached to the carrier structure.

Preferably, one or more of the at least one supporting element is shiftable relative to the carrier structure. In a preferred variant, all of the at least one supporting element are shiftable relative to the carrier structure. Either variant has the advantage that a well controlled translatory motion and thus a well controlled movement of each shiftable supporting element is ensured. In order to enable this well controlled translatory motion, the carrier may comprise any bearing enabling the well controlled translatory motion. Thus, the carrier may for example comprise one or more longitudinal bearings.

Alternatively, none of the at least one supporting element may be shiftable relative to the carrier structure.

Advantageously, one or more of the at least one supporting element comprises a flap. In a preferred variant, all of the at least one supporting element comprise each a flap. In either case, the surface section of those supporting elements which comprise a flap is preferably entirely or at least partially located on the flap. Since a flap is pivotable about an axis, this has the advantage that a well controlled pivoting and thus a well controlled and guided movement of the supporting elements and their surface section is ensured.

Preferably, one or more of the at least one supporting element comprises each two or more flaps. In a preferred variant, all of the at least one supporting elements comprise two or more flaps. In either case, the flaps divide the surface section of the respective supporting element into a number of subsections, said number corresponding to the number of flaps of the respective supporting element. In a first preferred variant, the two or more flaps are arranged independent of each other on the respective supporting element. This has the advantage that a robust construction of the respective supporting element is possible. In a second preferred variant, the two or more flaps are arranged on each other such that the subsections of the respective supporting element's surface section remain connected to each other when the flaps are tilted relatively to each other. This has the advantage, that the respective supporting element's surface section can be removed from a sticking tyre in a similar way as if the surface section would be made from an elastic and bendable material. Either arrangement of the flaps has the advantage that a green tyre can be removed from the subsections in a succeeding manner. Consequently, the force required for removing the green tyre from the carrier is reduced.

In case the carrier comprises more than one supporting element, in a preferred variant, one or more of the supporting element is shiftable relative to the carrier structure while one or more other of the supporting elements comprises one or more than one flap each. This has the advantage that a well controlled and guided movement of the supporting elements is ensured while the force required to remove the green tyre from the carrier is reduced.

In a preferred variant, one, more than one, or all of the at least one supporting elements are shiftable relative to the carrier structure and comprise one, two or more flaps. If a green tyre is removed from a carrier with such a supporting element, the green tyre may stick to the surface section of the respective supporting element such that the supporting element is shifted in a first step while being removed form other surface sections. In a second step, the flap of the supporting element may be pivoted such that the green tyre is removed from the surface section of the respective supporting element as well. Thus, any such supporting element has the advantage that the force required for removing the green tyre from the carrier is reduced.

Alternatively, none of the at least one supporting element may comprise a flap.

Independent on whether any of the at least one supporting element is shiftable relative to the carrier structure or whether any of the at least one supporting element comprises one or more flaps, the path along which the at least one supporting element with its surface section is moveable is oriented in an essentially vertical direction. This has the advantage that a green tyre carried by the carrier can be moved away from the carrier in an essentially vertical direction such that the green tyre is removed successively from different surface sections. This is particular advantageous if the handling of carrier and the green tyre is automated.

Preferably, the at least one supporting element is located at a first end of the path when the carrier is arranged in a working orientation where the supporting surface faces upwards such that the green tyre may be placed on the supporting surface and held on the supporting surface by gravitational force. Therefore, the at least one supporting element is located at a first end of the path when the green tyre rests on the supporting surface. This has the advantage that the weight of the green tyre resting on the supporting surface can be distributed over the surface section of the at least one supporting element and possible other surface sections. Consequently, the green tyre's weight is distributed over a large area such that undesired deformations of the green tyre are prevented.
Alternatively, none of the at least one supporting element is located at the first end of the path when the carrier is arranged in the working orientation where the supporting surface faces upwards such that the green tyre may be placed on the supporting surface and held on the supporting surface by gravitational force.
Advantageously, the surface section of the at least one supporting element is located at a first position if the at least one supporting element is located at the first end of the path and the surface section of the at least one supporting element is located above the first position if the at least one supporting element is moved away from the first end of the path. Consequently, the surface section of the at least one supporting element is located at a higher position if the at least one supporting element is moved away from the first end of the path. This higher position may be horizontally shifted as compared to the first position. Independent on whether it is horizontally shifted or not, the higher position has the advantage that a green tyre carried by the carrier can by removed from the carrier in an essentially upward direction such that the green tyre is removed successively from different surface sections. This simplifies the manual handling of the carrier and the green tyre. Furthermore, this simplifies an automation of the handling of the carrier and the green tyre.

Alternatively, the surface section of the at least one supporting element may not be located above the first position if the at least one supporting element is moved away from the first end of the path. Depending on the direction in which a green tyre should be removable from the carrier, such an alternative may be advantageous as well.

If the at least one supporting element is located at a first end of the path when the green tyre is arranged in the working orientation, the carrier preferably comprises a first arrestor arranged to stop a movement of one or more of the at least one supporting element at the first end of the path. Consequently, the concerned supporting elements are prevented from moving beyond the first end of the path. In a first preferred variant, the carrier comprises one single first arrestor arranged to stop a movement of all of the at least one supporting elements at a first end of said path. In a second preferred variant, the carrier comprises more than one first arrestor. In a third preferred variant, the carrier comprises at least a same number of first arrestors as the number of the at least one supporting element to be stopped at the first end of the path, the first arrestors being arranged such that each of the at least one supporting element to be stopped at the first end of the path is stopped by another one or more of the first arrestors. Consequently, one, more than one, or all of the at least one supporting elements to be stopped at the first end of the path may be stopped at the first end of the path by one, two, or more than two first arrestors.

Independent on whether the carrier comprises one or more first arrestors, each first arrestor may be arranged on the carrier structure or the respective of the at least one supporting element to be stopped at the first end of the path. Alternatively, each first arrestor may comprise two counteracting elements, whereof one is arranged on the carrier structure and one is arranged on the respective of the at least one supporting element to be stopped at the first end of the path.

Independent of the number of first arrestors and the exact construction of the one or more first arrestors, the first arrestors have the advantage that the movement of the at least one supporting element is stopped in an effective manner once it reaches the first end of the path. Consequently, the carrier is very robust for rough use.

Alternatively, the carrier may not comprise such a first arrestor. Such an alternative may be advantageous in case the construction of the carrier should become simpler.

Advantageously, the carrier comprises a second arrestor arranged to stop a movement of one or more of the at least one supporting element at a second end of the path. Consequently, the concerned supporting elements are prevented from moving beyond the second end of the path. In a first preferred variant, the carrier comprises one single second arrestor arranged to stop a movement of all of the at least one supporting elements at a second end of the path. In a second preferred variant, the carrier comprises more than one second arrestor. In a third preferred variant, the carrier comprises at least a same number of second arrestors as the number of the at least one supporting element to be stopped at the second end of the path, the second arrestors being arranged such that each of the at least one supporting element to be stopped at the second end of the path is stopped by another one or more of the second arrestors. Consequently, one, more than one, or all of the at least one supporting elements to be stopped at the second end of the path may be stopped at the second end of the path by one, two or more than two second arrestors.

Independent on whether the carrier comprises one or more second arrestors, each second arrestor may be arranged on the carrier structure or the respective of the at least one supporting element to be stopped at the second end of the path. Furthermore, each second arrestor may comprise two counteracting elements, whereof one is arranged on the carrier structure and one is arranged on the respective of the at least one supporting element to be stopped at the second end of the path.

Independent of the number of second arrestors and the exact construction of the one or more second arrestors, the second arrestors have the advantage that the movement of the at least one supporting element is stopped in an effective manner once it reaches the second end of the path. Consequently, the carrier is very robust for rough use.

Alternatively, the carrier may not comprise such a second arrestor. Such an alternative may be advantageous in case the construction of the carrier should become simpler.

Advantageously, the at least one supporting element with its surface section is passively moveable along a path relatively to the others of the at least two surface sections. This means that the carrier comprises no actuation means for actuating a movement of the at least one supporting element with its surface section relatively to the others of the at least two surface sections. This has the advantage that the construction of the carrier is simple and thus cost effective while the carrier is at the same time less prone to defects because there is no actuation means which could easily get defect if the carrier is extensively used.

Alternatively, the carrier may comprise some actuation means for actuating the movement of one or more of the at least one supporting elements along the path.

Preferably, one or more of the at least one supporting element is biased by an elastic element towards the first end of the path. Advantageously, all of the at least one supporting element are biased by an elastic element towards the first end of the path. In either case, the carrier comprises in a first preferred variant one single elastic element arranged to bias a movement of all of the at least one supporting elements towards the first end of the path. In a second preferred variant, the carrier comprises more than one elastic element. In a third preferred variant, the carrier comprises at least a same number of elastic elements as the number of the at least one supporting element to be biased towards the first end of the path, the elastic elements being arranged such that each of the at least one supporting element to be biased towards the first end of the path is biased by another one or more of the elastic elements towards the first end of the path. Consequently, one, more than one, or all of the at least one supporting elements to be biased towards the first end of the path may be biased towards the first end of the path by one, two or more than two elastic elements.

Independent on the number of the elastic elements, this has the advantage that each biased supporting element is moved to the first end of the path if there is no external force acting on the respective supporting element. Furthermore, if a green tyre carried by the carrier is removed from the carrier, each biased supporting element may stick with its surface section to the green tyre such that it is moved away from the first end of the path against the force of the elastic element until the point where the force exerted of the elastic element is large enough to release the biased supporting element from the green tyre. Accordingly, the elastic element enables a dynamical adjustment of the point where the biased supporting element is released from the green tyre to the strength with which the green tyre is sticking to the surface section of the biased supporting element.

These advantages are obtained independent of the form of the one or more elastic element. For providing an example, the one or more elastic element may each be a spring or may each be made of some elastic material. But of course, the one or more elastic element may have some other form as well.

Alternatively, the carrier may not comprise an elastic element for biasing one or more of the at least one supporting element towards the first end of the path.

Preferably, the carrier comprises two or more of the at least one supporting elements. This has the advantage that the two or more supporting elements can be distributed over the supporting surface of the carrier.

Alternatively, the carrier may only comprise one supporting element. Such an alternative has the advantage that the construction of the carrier is simpler and thus less cost extensive.

If the carrier comprises two or more supporting elements, preferably two or more of the two or more supporting elements are connected with each other such that they are moveable together along the path. The connection of these two or more supporting elements is arranged such that it does not touch a green tyre carried by the carrier and does thus not form a part of the carrier's supporting surface. This has the advantage that the two or more connected supporting elements are movable in a coordinated manner. Therefore, the handling of the carrier and any green tyre carried by the carrier is simplified.

In a preferred variant, the connection of the connected two or more supporting elements is located on a lower side of the carrier. In a further preferred variant, the connection of the two or more supporting elements is located on an upper side of the carrier. Both variants have the advantage that the connection of the connected two or more supporting elements is well separated from the carrier structure. Thus, a free movement of the connected two or more supporting elements is ensured.

Alternatively, none of the two or more supporting elements are connected with each other. Such an alternative has the advantage that the supporting elements are individually movable. Furthermore, such an alternative has the advantage that the supporting elements may be replaced individually in case of some damage.

If the carrier comprises two or more supporting elements, advantageously one or more of the two or more supporting elements belongs to a first set of supporting elements and is moveable along a first path having a first length and one or more of the two or more supporting elements belongs to a second set of supporting elements and is moveable along a second path having a second length. This has the advantage that the surface area touched by a green tyre can be reduced in two steps because the supporting elements are movable along two different distances such that they are released from a sticking green tyre in two different stages of the green tyre's removal from the carrier. Consequently, the two sets of supporting elements have the advantage that the force required to remove a green tyre from the carrier is reduced. Of course, this advantage is maintained if the carrier comprises more than two sets of supporting elements that are movable along paths having different lengths.

In a first preferred variant, if the first set of supporting elements comprises more than one supporting element, the supporting elements of the first set of supporting elements are connected with each other such that they are moveable together along the first path. In a second preferred variant, if the first set of supporting elements and the second set of supporting elements comprise both more than one supporting element, the supporting elements of the first set supporting elements are connected with each other such that they are moveable together along the first path and the supporting elements of the second set supporting elements are connected with each other such that they are moveable together along the second path. If the carrier comprises more than two sets of supporting elements that are movable along paths with different lengths and if these sets comprise more than one supporting element, the supporting elements belonging to a particular set of supporting elements are in a third preferred variant connected with each other such that they are movable together along the path of the particular set of supporting elements. In either case, the supporting elements may be connected on the lower side or on the upper side of the carrier. Such an arrangement of the connection has the advantage that a free movement of the connected two or more supporting elements is ensured. Alternatively, the connection may be arranged differently.

Independent of the arrangement of the connection, the connection of two or more supporting elements has the advantage that the two or more connected supporting elements are movable in a coordinated manner. Thus, any such connection simplifies the handling of the carrier and any green tyre carried by the carrier.

Alternatively, none of the supporting elements belonging to a set of supporting elements that are moveable along a path with a same length are connected. Such an alternative has the advantage that the concerned supporting elements may easily be replaced in case of some damage.

As an alternative to these variants with two or more sets of supporting elements being movable along a path having a length depending on the particular set of supporting elements, the carrier may not comprise two or more sets of supporting elements being movable along a path having a length depending on the particular set of supporting elements. Such an alternative has the advantage that the construction of the carrier is simpler and thus cheaper.

If the carrier comprises two or more sets of supporting elements that are movable along paths having different lengths, the supporting elements of the different sets are preferably arranged in regular patterns. This has the advantage that the supporting elements of each set of supporting elements may be arranged such that there is no torsional moment acting on the green tyre if the green tyre is removed in one go from the surface sections of the supporting elements belonging to a same set of supporting elements. Therefore, the arrangement of the two or more sets of supporting elements in regular patterns has the advantage that the handling of the carrier and green tyres carried by the carrier is simplified.

In a first preferred variant, the two or more sets of supporting elements comprise each two, three, four or more supporting elements, wherein the nearest neighbours of each supporting element belong to a different set of supporting elements than the respective supporting element. This has the advantage that the supporting elements which belong to the same set of supporting elements are distributed over the supporting surface such that there is no torsional moment acting on the green tyre if the green tyre is removed from the carrier. Therefore, the handling of the carrier and green tyres carried by the carrier is simplified.

In a second preferred variant, one or more of the two or more sets of supporting elements comprises one single supporting element, while the other sets of supporting elements comprise each two, three, four or more supporting elements. This has as well the advantage that the supporting elements may be arranged such that there is no torsional moment acting on the green tyre if the green tyre is removed in one go from the surface sections of the supporting elements belonging to a same set of supporting elements.

In a third preferred variant, the two or more sets of supporting elements comprise each one single supporting element. This has the advantage that each supporting element is movable along a path having a different length. In this case, the supporting elements are preferably arranged in a succession where the length of their path becomes longer from neighbouring supporting element to neighbouring supporting element. In a variant, different successions of the supporting elements are possible as well.

Alternatively, the supporting elements of the different sets are not arranged in regular patterns.

Preferably, at least one surface section of the at least two surface sections is fixed to the carrier structure. In a variant, preferred variant, at least one surface section of the at least two surface sections is formed integrally with the carrier structure. Both variants have the advantage that, when a green tyre is removed from the carrier, the green tyre carried by the carrier is removed in a first step from the at least one surface section which is fixed to or formed integrally with the carrier structure and removed in one or more further steps from the other surface sections. Thus, the force which is required to remove the green tyre from the carrier is reduced.

If the carrier comprises two or more supporting elements and if at least one surface section of said at least two surface sections is fixed to or formed integrally with the carrier structure, the carrier comprises preferably at least three surface sections and the surface sections of the two or more supporting elements are preferably distributed over the supporting surface with spaces between themselves. These spaces may for example be filled with the at least one surface section of said at least three surface sections which is fixed to or formed integrally with the carrier structure. This has the advantage that, if a green tyre carried by the carrier is removed from the carrier, the surface sections of the supporting elements which may stick to the green tyre are distributed over the supporting surface and thus over the body of the green tyre. Consequently, there is no torsional moment acting on the green tyre if the green tyre is removed from the carrier. Therefore, the distribution of the two or more supporting elements has the advantage that the handling of the carrier and green tyres carried by the carrier is simpler.

Alternatively, none of the at least one surface section is fixed to or formed integrally with the carrier structure. In this case, the surface section of the at least one supporting element forms the supporting surface. Such an alternative has the advantage that all surface sections may be replaced by replacing the concerned supporting element. Consequently, the maintenance of the carrier is simplified.

Advantageously, the carrier is made from a synthetic material. For example, it may be made from plastic or fibre-reinforced plastic. In a preferred variant, the carrier is made from metal like for example steel or aluminium. In a further preferred variant, the carrier structure is made from metal like for example steel or aluminium, while the at least one supporting element is made from a synthetic material like for example plastic or fibre-reinforced plastic. In this case, if at least one surface section of the at least two surface sections is fixed to the carrier structure, this surface section may be made from metal like for example steel or aluminium or may be made from a synthetic material like for example plastic or fibre-reinforced plastic.

Alternatively, the carrier, the carrier structure or the at least one supporting element, respectively, may be made from a different material or from a combination of different materials.

Preferably, the supporting surface has the shape of a cone. This has the advantage that a green tyre can be carried by the carrier without being deformed in an undesired way. This advantage is obtained independent on whether the supporting surface comprises the tip of the cone or not. Furthermore, this advantage is obtained independent on the slope of the cone.

In a preferred variant, the supporting surface has the shape of two or more interlaced cones. This shape may resemble the shape of the carrier described in EP 0 767 051 B1 (Sumitomoto Rubber Industries Ltd.). This has as well the advantage that a green tyre can be carried by the carrier without being deformed in an undesired way.

Alternatively, the supporting surface has a different shape than the one of a cone or the one of two or more interlaced cones.

Advantageously, the surfaces of the surface sections are structured. For example, the surfaces may comprise a statistical roughness or a regular or irregular pattern with higher and lower parts. In case the surfaces comprise a pattern, the pattern may be formed by ribs or hemispheres which stand out of the surface or which are dimples in the surface. In case the surfaces comprise a pattern, the higher parts of the pattern cover preferably less than 67%, 50% or 33% of the surfaces. Furthermore, the distance between the higher parts and the lower parts of the pattern measured perpendicular to the average surface height is advantageously less than 2mm, in particular less than 1mm. Even more preferably, the distance between the higher parts and the lower parts of the pattern measured perpendicular to the average surface height is less than 0.5mm. Such structured surfaces have the advantage that a sticking green tyre can be removed from the surfaces with less force.

Alternatively, the surfaces of the surface sections are not structured. This has the advantage that the production of the surface sections is simpler.

Preferably, the carrier is a pallet. This has the advantage that the handling of the carrier is simple and can easily be automated.

Alternatively, the carrier is not a pallet.

Advantageously, the carrier is shaped to enable a stacked stocking. This has the advantage that the handling of the carrier is simplified since carriers which are not in use can be piled up.

Alternatively, the carrier has a shape which is not designed for a stacked stocking. This has the advantage that the design of the carrier is less restricted such that the carrier's shape may be optimised for other purposes.

Preferably, the carrier comprises two or more supporting surfaces, each for supporting a green tyre, wherein each of the supporting surfaces is formed by at least two surface sections, wherein per supporting surface, at least one supporting element is provided which includes a surface forming one of the at least two surface sections of the respective supporting surface, and wherein the at least one supporting element with its surface section is moveable along a path relatively to the others of the at least two surface sections of the respective supporting surface. This has the advantage that two or more green tyres can be carried by one carrier without being deformed in an undesired manner and without sticking together. This advantage is obtained independent on whether one or more of the supporting elements include two or more surface sections belonging to different supporting surfaces or not.

In preferred variants, one, more than one, or all of the two or more supporting surfaces may exhibit one or more of the features described above in a general way for the carrier.

Alternatively, the carrier comprises one single supporting surface for carrying one green tyre. Such an alternative has the advantage that the carrier is less bulky and lighter in weight when being loaded with a green tyre. Consequently, such an alternative has the advantage that the handling of the carrier is simpler.

Other advantageous embodiments and combinations of features come out from the detailed description below and the totality of the claims.

### Brief description of the drawings

The drawings used to explain the embodiments show:
- Fig. 1: an oblique view of a pallet which is a carrier according to the invention,
- Fig. 2: an oblique view of a carrier structure of the pallet according to the invention,
- Fig. 3: an oblique view of supporting elements of the pallet according to the invention,
- Fig. 4: an oblique view of the pallet with the supporting elements, and
- Fig. 5: a top view of eight supporting elements of a second pallet according to the invention.

In the figures, the same components are given the same reference symbols.

### Preferred embodiments

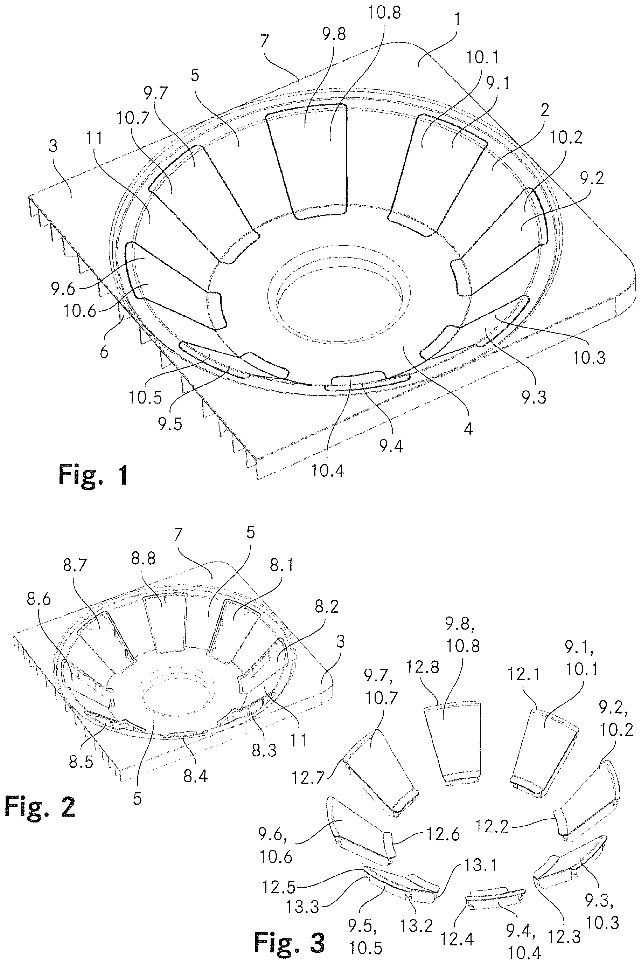

Figure 1 shows an oblique view of a pallet 1 which is a carrier according to the invention. This pallet 1 comprises a supporting surface 2 and is shown in a working orientation, where the supporting surface 2 faces upwards for receiving a green tyre to be carried by the pallet 1.

The supporting surface 2 of the pallet 1 resembles a reversed cone 5. The open base of this cone 5 faces upwards. Thus, the inner side of the cone 5 which faces upwards is a part of the supporting surface 2 for receiving the green tyre. At the upper end of the cone 5, a flat, quadratic body 3 of the pallet 1 is connected to the base of the cone 5. This flat, quadratic body 3 is oriented horizontally and embraces the base of the cone 5 of the supporting surface 2. Thus, the pallet 1 may be grabbed and carried on the flat, quadratic body 3 without touching the supporting surface 2 or a green tyre carried on the supporting surface 2. Therefore, the flat, quadratic body 3 facilitates the handling of the pallet 1 and enables to store the pallet 1 loaded with a green tyre on a rack. In other embodiments of the invention, the flat, quadratic body 3 may be a body with a different shape. In even another embodiment of the invention, there may be no such body at all.

Starting from the base of the cone 5, the supporting surface 2 follows the cone 5 downwards in the direction where the surface of the cone 5 merges towards a tip. Before merging completely to the tip, the supporting surface 2 ends in a ring 4 which is oriented parallel to the flat, quadratic body 3 of the pallet 1. The upwards facing surfaces of this ring 4 and of the cone 5 form together a first surface section 11 of the supporting surface 2.

In the ring 4, there are eight openings 8.1, ..., 8.8 arranged in equal solid angles around the circumference of the ring 4 (see figure 2). Each of these eight openings 8.1, ..., 8.8 extends in radial direction from the ring 4 across the cone 5 to the base of the cone 5 and forms a passage from a lower side to an upper side of the ring 4 and cone 5, respectively. In each of these openings 8.1, ..., 8.8, a supporting element 9.1, ..., 9.8 is mounted to be movable in vertical direction. These supporting elements 9.1, ..., 9.8 have upward facing surface sections 10.1, ..., 10.8 which continuously fit into the surrounding first surface section 11 of the ring 4 and cone 5, respectively. Therefore, the surface sections 10.1, ..., 10.8 and the first surface section 11 form together the supporting surface 2 of the pallet 1.

Figure 2 shows an oblique view of a carrier structure 7 of the pallet 1. This carrier structure 7 is integrally formed by the flat, quadratic body 3, the cone 5 and the ring 4. Thus, the openings 8.1, ..., 8.8 in the cone 5 and ring 4 are openings 8.1, ..., 8.8 in the carrier structure 7.

Since figure 2 does not show the supporting elements 9.1, ..., 9.8, the openings 8.1, ..., 8.8 in the carrier structure 7 are clearly visible. Therefore, it is visible that each of the openings 8.1, ..., 8.8 provides at its upper side a groove along its border to the first surface section 11. Furthermore, it is clearly visible that the first surface section 11 which is formed by the upwards facing surfaces of this ring 4 and the cone 5 is an integral part of the carrier structure 7. In another embodiment of the invention, the first surface section 11 may be one or more elements which are fixed to the carrier structure 7. In yet another embodiment of the invention, there may be no first surface section which is fixed to the carrier structure 7 or which is integrally formed with the carrier structure 7. In case each of the surface sections belongs to a supporting element or if the first surface section is replaceable, the supporting surface of the pallet may be amended by replacing the supporting elements and possibly the first surface section. For example, surface sections with a steeper or flatter slope may be used. Therefore, the same carrier structure can be adapted to provide a supporting surface which follows the shape of a steeper or a flatter cone. Consequently, such a pallet may easily be adapted to different types of green tyres.

Figure 3 shows an oblique view of the supporting elements 9.1, ..., 9.8 of the pallet 1 arranged as if they would be received in the openings 8.1, ..., 8.8 in the carrier structure 7. Since the carrier structure 7 is not shown, one can see that each of the supporting elements 9.1, ..., 9.8 has a main body. The external dimensions of each of these main bodies are such that the respective main body fits into one of the openings 8.1, ..., 8.8 in the carrier structure 7.

In each supporting element 9.1, ..., 9.8, the upper side of the main body is covered with the surface section 10.1, ..., 10.8 of the respective supporting element 9.1, ..., 9.8. Thereby, the surface section 10.1, ..., 10.8 slightly overshoots the main body in each direction to an extend to fill the groove along the border of the respective opening 8.1, ..., 8.8 to the first surface section 11. Thus, each supporting element 9.1, ..., 9.8 can be immersed in the respective opening 8.1, ..., 8.8 to a first position, where the upper surface of the respective supporting element 9.1, ..., 9.8's surface section 10.1, ..., 10.8 is at a same level as the upper surface of the surrounding first surface section 11. There, the movement of the respective supporting element 9.1, ..., 9.8 further down is stopped. Thus, the overshooting parts of the surface sections 10.1, ..., 10.8 act as first arrestors 12.1, ..., 12.8.

If the supporting elements 9.1, ..., 9.8 are located in their first positions, they cannot be moved further down relative to the carrier structure 7. In these first positions, the upper surfaces of the supporting elements' 9.1, ..., 9.8 surface sections 10.1, ..., 10.8 are at a same level as the upper surface of the surrounding first surface section. Therefore, if the supporting elements 9.1, ..., 9.8 are positioned in their first positions, the weight of a green tyre carried by the pallet 1 is distributed over the first surface section 11 and the surface sections 10.1, ..., 10.8 of the supporting elements 9.1, ..., 9.8. Consequently, if the supporting elements 9.1, ..., 9.8 are located in their first positions, the pallet 1 is positioned in a carrying position (see figure 1).

As mentioned already, the supporting elements 9.1, ..., 9.8 are mounted in the openings 8.1, ..., 8.8 to be movable in a vertical direction and cannot be moved further down relative to the carrier structure 7 than their first positions. Thus, the supporting elements 9.1, ..., 9.8 are located at a first end of a path along which they are movable, if they are located in their first positions.

Starting from their first positions, the supporting elements 9.1, ..., 9.8 can be moved upwards along the path. After some distance, they are stopped at a second end of the path by some second arrestors 13.1, 13.2, 13.3. These second arrestors 13.1, 13.2, 13.3 are shaped like horizontally oriented dents. Four of them are attached to each of the supporting elements 9.1, ..., 9.8. More precisely, four of them are placed around the circumference of the main body of the respective supporting element 9.1, ..., 9.8 at a vertical distance below the overlapping parts of the surface sections 10.1, ..., 10.8. Thus, if the supporting elements 9.1, ..., 9.8 are mounted in the openings 8.1, ..., 8.8, the second arrestors 13.1, 13.2, 13.3 are located below the carrier structure 7 and hit against a lower surface of the carrier structure 7 if the supporting elements 9.1, ..., 9.8 are moved upwards to the second end of the path.

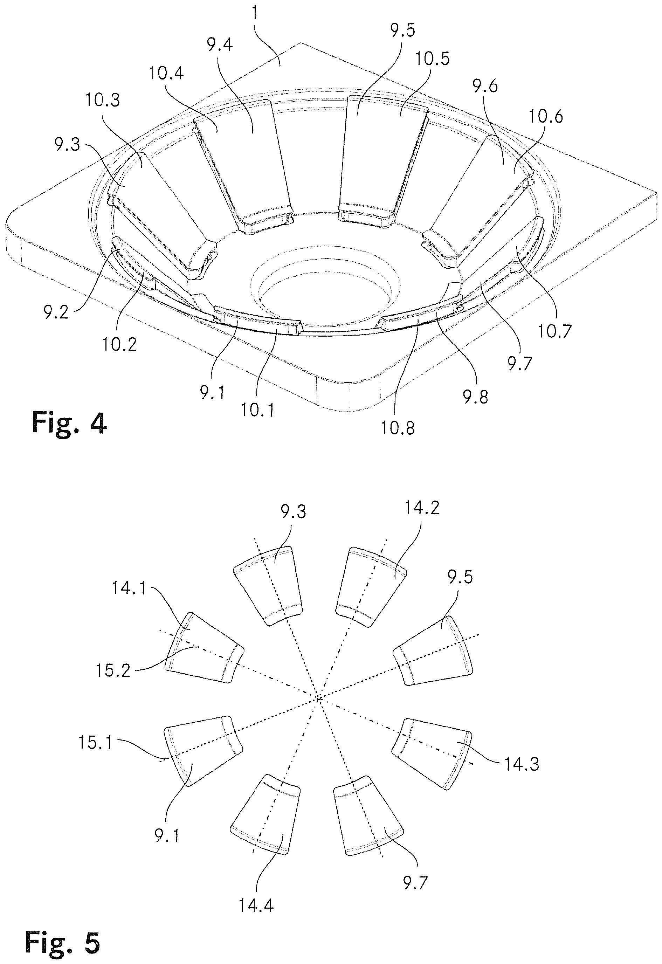

Figure 4 shows an oblique view of the pallet 1 with the supporting elements 9.1, ..., 9.8 moved to the second end of the path. Thus, one can see that the surface sections 10.1, ..., 10.8 of the supporting elements 9.1, ..., 9.8 are located in an elevated position as compared to the first surface section 11.

If a green tyre is put onto the supporting surface 2 of the pallet 1, the supporting elements 9.1, ..., 9.8 are moved to their first positions such that the pallet 1 is in the carrying position as shown in figure 1. When stored on the supporting surface 2, the green tyre will stick to the supporting surface 2. In order to remove the green tyre from the pallet 1, one has to overcome the force with which the green tyre sticks to the supporting surface 2. This force is large because there is a large contact area between the green tyre and the supporting surface 2 in order to prevent undesired deformations of the green tyre.

If the green tyre is removed from the pallet 1, the supporting elements 9.1, ..., 9.8 stick with their surface sections 10.1, ..., 10.8 to the green tyre and are moved in a first step by the movement of the green tyre away from their first positions. Thus, during this first step, the green tyre is only removed from the first surface section 11. This requires less force than removing the green tyre from the entire supporting surface 2 in one go. Only in a second step, when the supporting elements 9.1, ..., 9.8 reach the second end of the path and are stopped by the second arrestors 13.1, 13.2, 13.3, the green tyre is removed from the surface sections 10.1, ..., 10.8 of the supporting elements 9.1, ..., 9.8, too. Again, this requires less force than removing the green tyre from the entire supporting surface 2 in one go. Therefore, the pallet 1 makes it easier to remove the green tyre from the supporting surface 2.

In order to reduce further the force required for removing the green tyre from the pallet 1, the surfaces of the first surface section 11 and the surface sections 10.1, ..., 10.8 of the supporting elements 9.1, ..., 9.8 are structured. In the case of the pallet 1 shown in the figures 1 to 4, the structure of the surfaces is a statistical roughness. Other embodiments of the pallet 1, the structured surfaces may be a regular or an irregular pattern. For example, the pattern may be formed by ribs or hemispheres which stand out of the surfaces or which are dimples in the surfaces. In case the surfaces comprise a pattern instead of a statistical roughness, the higher parts of the pattern cover depending on embodiment 60%, 45% or 30% of the surfaces. Furthermore, the distance between the higher parts and the lower parts of the pattern measured perpendicular to the average surface height is 1.5mm, 0.75mm or 0.25mm, depending on the particular embodiment.

Figure 5 shows a top view of eight supporting elements 9.1, 9.3, 9.5, 9.7, 14.1, 14.2, 14.3, 14.4 of second pallet according to the invention. The carrier structure 7 of this second pallet is not shown because it is the same as the one of the pallet 1 shown in figures 1 to 4.

In contrast to the eight supporting elements 9.1, ..., 9.8 of the pallet 1 shown in figures 1 to 4, four of the second pallet's eight supporting elements 14.1, 14.2, 14.3, 14.4 have a larger height such that they are movable along a longer path than the second pallet's other four supporting elements 9.1, 9.3, 9.5, 9.7. Thus, a first set of four of the eight supporting elements 9.1, 9.3, 9.5, 9.7 is movable along a first path which has a first length, while a second set of four of the eight supporting elements 14.1, 14.2, 14.3, 14.4 is movable along a second path which has a second length that is larger than the first length. Therefore, a green tyre is removed in three steps of the second pallet. In a first step, the green tyre is removed from the first surface section. In a second step, it is removed from the first set of supporting elements 9.1, 9.3, 9.5, 9.7 and in a third step from the second set of supporting elements 14.1, 14.2, 14.3, 14.4. In this second pallet, several arrangements of the supporting elements 9.1, 9.3, 9.5, 9.7, 14.1, 14.2, 14.3, 14.4 in the openings in the carrier structure are possible. In the example shown in figure 5, the supporting elements 9.1, 9.3, 9.5, 9.7, 14.1, 14.2, 14.3, 14.4 of the first set and of the second set of supporting elements 9.1, 9.3, 9.5, 9.7, 14.1, 14.2, 14.3, 14.4 are both arranged in a cross 15.1, 15.2. The cross 15.1 of the first set of supporting elements 9.1, 9.3, 9.5, 9.7 is rotated about a vertical axis by 45 degrees as compared to the cross 15.2 of the second set of supporting elements 14.1, 14.2, 14.3, 14.4. In this arrangement, the supporting elements 9.1, 9.3, 9.5, 9.7, 14.1, 14.2, 14.3, 14.4 of both sets of supporting elements 9.1, 9.3, 9.5, 9.7, 14.1, 14.2, 14.3, 14.4 are distributed in a regular pattern over the supporting surface. Accordingly, a green tyre is not exposed to a torsional moment when being removed from the second pallet.

The invention is not limited to the pallet 1 shown in the figures 1 to 4 and the second pallet illustrated in figure 5.

In another embodiment of the invention, each of the eight supporting elements is movable along a different path having a different length. In this case, the supporting elements may be arranged such that starting from the supporting element with the shortest path and going around the supporting surface in a circle, each neighbouring supporting element has a longer path than the previous supporting element, such that at the end of the circle, the supporting element with the longest path is located beside the supporting element with the shortest path.
In any of the above described embodiments of the invention, the supporting elements may be connected together. This connection may for example be located on the lower side or on the upper side of the carrier structure. In this case, the supporting elements are movable together along the path. If the pallet comprises more than one set of supporting elements, wherein the supporting elements of each set are movable along a path having a different length, the supporting elements of each set of supporting elements may be connected together.
Furthermore, in any of the above described embodiments of the invention, each of the supporting elements may be biased with a spring towards its first position. These springs may for example be located at a lower side of the carrier structure.
In a further embodiment of the invention, the supporting elements are not shiftable along the path but are flaps which are pivotable about an axle mounted to the carrier structure. In this case, the flaps are not moved in a translatory movement but are pivoted. In this case, the movement of the flaps may be limited such that the supporting elements are stopped at a first end and possibly at a second end of the path. In this case, the path of the supporting elements is oriented in an essentially vertical direction. Illustrated on the pallets shown in figures 1 to 5, the supporting elements may be pivotable about axles which are mounted along the base of the cone of the supporting surface. In this case, if the supporting elements are located in their first positions, the lower ends of the supporting elements are located on the ring. If the supporting elements are moved to the second end of the path, their lower ends are lifted from the ring. In this example, the paths of the different supporting elements may have different lengths as described above. Furthermore, there may be two or more sets of supporting elements which are movable along paths having different lengths as described above in the context of the second pallet shown in figure 5.

In still another embodiment, the supporting elements are shiftable along the path and comprise flaps which are pivotable about an axle mounted to the respective supporting element.

Of course, the invention is not limited to pallets as described above.

Furthermore, the shape of the supporting surface may be different than described above. For example, the supporting surface may be flat or may follow the shape of two interlaced cones. Additionally, the number of supporting elements is not limited to eight. For example, there may be only one supporting element. But any other number of supporting elements is possible as well. Furthermore, there may be more than one supporting surface per carrier, such that the carrier may at the same time support more than one green tyre.
In summary, it is to be noted that a carrier is provided which enables a removal of the green tyre from the carrier with less force and which prevents undesired deformations on the green tyre carried by the carrier.

## Claims

1. Carrier (1) for a green tyre, the carrier (1) being a pallet, comprising:
a) a supporting surface (2) for supporting said green tyre, wherein said supporting surface (2) is formed by at least two surface sections (10.1, ..., 10.8, 11),
b) a carrier structure (7) which carries said supporting surface (2), and
c) at least one supporting element (9.1, ..., 9.8, 14.1, ... 14.4) which includes a surface forming one of said at least two surface sections (10.1, ..., 10.8),
**characterised in that** said at least one supporting element (9.1, ..., 9.8, 14.1, ..., 14.4) with its surface section (10.1, ..., 10.8) is moveable along a path relatively to the others of said at least two surface sections (10.1, ..., 10.8, 11), wherein said path is oriented in an essentially vertical direction.

2. Carrier (1) according to claim 1, **characterised in that** one or more of said at least one supporting element (9.1, ..., 9.8, 14.1, ..., 14.4) is movably mounted to said carrier structure (7).

3. Carrier (1) according to claim 1 or 2, **characterised in that** one or more of said at least one supporting element (9.1, ..., 9.8, 14.1, ..., 14.4) is shiftable relative to said carrier structure (7).

4. Carrier according to claim 1 or 2, **characterised in that** one or more of said at least one supporting element comprises a flap.

5. Carrier (1) according to one of claims 1 to 4, **characterised in that** said at least one supporting element (9.1, ..., 9.8, 14.1, ..., 14.4) is located at a first end of said path when said carrier (1) is arranged in a working orientation where said supporting surface (2) faces upwards such that said green tyre may be placed on the supporting surface (2) and held on said supporting surface (2) by gravitational force.

6. Carrier (1) according to claim 5, **characterised in that** said surface section (10.1, ..., 10.8, 11) of said at least one supporting element (9.1, ..., 9.8, 14.1, ..., 14.4) is located at a first position if said at least one supporting element (9.1, ..., 9.8, 14.1, ..., 14.4) is located at said first end of said path and **in that** said surface section (10.1, ..., 10.8, 11) of said at least one supporting element (9.1, ..., 9.8, 14.1, ..., 14.4) is located above said first position if said at least one supporting element (9.1, ..., 9.8, 14.1, ..., 14.4) is moved away from said first end of said path.

7. Carrier (1) according to claim 5 or 6, **characterised in that** said carrier (1) comprises a first arrestor (12.1, ..., 12.8) arranged to stop a movement of one or more of said at least one supporting element (9.1, ..., 9.8, 14.1, ..., 14.4) at said first end of said path.

8. Carrier (1) according to claim 7, **characterised in that** said carrier (1) comprises a second arrestor (13.1, 13.2, 13.3) arranged to stop a movement of one or more of said at least one supporting element (9.1, ..., 9.8, 14.1, ..., 14.4) at a second end of said path.

9. Carrier (1) according to one of claims 5 to 8, **characterised in that** one or more of said at least one supporting element (9.1, ..., 9.8, 14.1, ..., 14.4) is biased by an elastic element towards said first end of said path.

10. Carrier (1) according to one of claims 1 to 9, **characterised in that** said carrier (1) comprises two or more of said at least one supporting elements (9.1, ..., 9.8, 14.1, ..., 14.4).

11. Carrier (1) according to claim 10, **characterised in that** two or more of said two or more supporting elements (9.1, ..., 9.8, 14.1, ..., 14.4) are connected with each other such that they are moveable together along said path.

12. Carrier (1) according to claim 10 or 11, **characterised in that** one or more of said two or more supporting elements (9.1, 9.3, 9.5, 9.7) belongs to a first set of supporting elements (9.1, 9.3, 9.5, 9.7) and is moveable along a first path having a first length and **in that** one or more of said two or more supporting elements (14.1, ..., 14.4) belongs to a second set of supporting elements (14.1, ..., 14.4) and is moveable along a second path having a second length.

13. Carrier (1) according to one of claims 1 to 12 **characterised in that** at least one surface section (11) of said at least two surface sections (10.1, ..., 10.8, 11) is fixed to the carrier structure (7).

## Patentansprüche

1. Träger (1) für einen Reifenrohling, wobei der Träger (1) eine Palette ist, umfassend:
a) eine Auflagefläche (2) als Auflage für den Reifenrohling, wobei die Auflagefläche (2) aus wenigstens zwei Flächenabschnitten (10.1, ..., 10.8, 11) gebildet wird,
b) eine Trägerstruktur (7), welche die Auflagefläche (2) trägt, und
c) wenigstens ein Stützelement (9.1, ..., 9.8, 14.1, ... 14.4), das eine Fläche umfasst, die eine der wenigstens zwei Flächenabschnitte (10.1, ..., 10.8) bildet,
**dadurch gekennzeichnet, dass** wenigstens ein Stützelement (9.1, ..., 9.8, 14.1, ..., 14.4) mit seinem Flächenabschnitt (10.1, ..., 10.8) entlang einem Weg relativ zu den anderen der wenigstens zwei Flächenabschnitte (10.1, ..., 10.8, 11) beweglich ist, wobei der Weg in einer im Wesentlichen vertikalen Richtung ausgerichtet ist.

2. Träger (1) nach Anspruch 1, **dadurch gekennzeichnet, dass** eines oder mehrere des wenigstens einen Stützelements (9.1, ..., 9.8, 14.1, ..., 14.4) an der Trägerstruktur (7) beweglich montiert sind.

3. Träger (1) nach Anspruch 1 oder 2, **dadurch gekennzeichnet, dass** eines oder mehrere des wenigstens einen Stützelements (9.1, ..., 9.8, 14.1, ..., 14.4) relativ zur Trägerstruktur (7) verschiebbar sind.

4. Träger nach Anspruch 1 oder 2, **dadurch gekennzeichnet, dass** eines oder mehrere des wenigstens einen Stützelements eine Klappe umfassen.

5. Träger (1) nach einem der Ansprüche 1 bis 4, **dadurch gekennzeichnet, dass** das wenigstens eine Stützelement (9.1, ..., 9.8, 14.1, ..., 14.4) an einem ersten Ende des Weges angeordnet ist, wenn der Träger (1) in einer Arbeitsausrichtung angeordnet ist, in der die Auflagefläche (2) nach oben zeigt, so dass der Reifenrohling auf die Auflagefläche (2) gesetzt und auf der Auflagefläche (2) durch Schwerkraft gehalten werden kann.

6. Träger (1) nach Anspruch 5, **dadurch gekennzeichnet, dass** der Flächenabschnitt (10.1, ..., 10.8, 11) des wenigstens einen Stützelements (9.1, ..., 9.8, 14.1, ..., 14.4) an einer ersten Position angeordnet ist, wenn das wenigstens eine Stützelement (9.1, ..., 9.8, 14.1, ..., 14.4) am ersten Ende des Weges angeordnet ist, und dass der Flächenabschnitt (10.1, ..., 10.8, 11) des wenigstens einen Stützelements (9.1, ..., 9.8, 14.1, ..., 14.4) oberhalb der ersten Position angeordnet ist, wenn das wenigstens eine Stützelement (9.1, ..., 9.8, 14.1, ..., 14.4) vom ersten Ende des Weges weg bewegt wird.

7. Träger (1) nach Anspruch 5 oder 6, **dadurch gekennzeichnet, dass** der Träger (1) eine zum Stoppen einer Bewegung von einem oder mehreren des wenigstens einen Stützelements (9.1, ..., 9.8, 14.1, ..., 14.4) am ersten Ende des Weges ausgebildete erste Arretierung (12.1, ..., 12.8) umfasst.

8. Träger (1) nach Anspruch 7, **dadurch gekennzeichnet, dass** der Träger (1) eine zum Stoppen einer Bewegung von einem oder mehreren des wenigstens einen Stützelements (9.1, ..., 9.8, 14.1, ..., 14.4) an einem zweiten Ende des Weges ausgebildete zweite Arretierung (13.1, 13.2, 13.3) umfasst.

9. Träger (1) nach Anspruch 5 bis 8, **dadurch gekennzeichnet, dass** eines oder mehrere des wenigstens einen Stützelements (9.1, ..., 9.8, 14.1, ..., 14.4) durch ein elastisches Element zum ersten Ende des Weges hin vorgespannt sind.

10. Träger (1) nach einem der Ansprüche 1 bis 9, **dadurch gekennzeichnet, dass** der Träger (1) zwei oder mehr des wenigstens einen Stützelements (9.1, ..., 9.8, 14.1, ..., 14.4) umfasst.

11. Träger (1) nach Anspruch 10, **dadurch gekennzeichnet, dass** zwei oder mehr der zwei oder mehr Stützelemente (9.1, ..., 9.8, 14.1, ..., 14.4) miteinander so verbunden sind, dass sie zusammen entlang des Weges beweglich sind.

12. Träger (1) nach Anspruch 10 oder 11, **dadurch gekennzeichnet, dass** eines oder mehrere der zwei oder mehr Stützelemente (9.1, 9.3, 9.5, 9.7) zu einer ersten Menge von Stützelementen (9.1, 9.3, 9.5, 9.7) gehören und entlang eines ersten Weges mit einer ersten Länge beweglich sind und dass eines oder mehrere der zwei oder mehr Stützelemente (14.1, ..., 14.4) zu einer zweiten Menge von Stützelementen (14.1, ..., 14.4) gehören und entlang eines zweiten Weges mit einer zweiten Länge beweglich sind.

13. Träger (1) nach Anspruch 1 bis 12 **dadurch gekennzeichnet, dass** wenigstens ein Flächenabschnitt (11) der wenigstens zwei Flächenabschnitte (10.1, ..., 10.8, 11) an der Trägerstruktur (7) befestigt ist.

## Revendications

1. Support (1) pour un pneu cru, le support (1) étant une palette, comprenant:
a) une surface de support (2) pour supporter ledit pneu cru, dans lequel ladite surface de support (2) est formée par au moins deux sections de surface (10.1, ..., 10.8, 11),
b) une structure de support (7) qui porte ladite surface de support (2), et
c) au moins un élément de support (9.1, 9.8, 14.1, ..., 14.4) présentant une surface formant une desdites au moins deux sections de surface (10.1, ..., 10.8),
**caractérisé en ce que** ledit au moins un élément de support (9.1, ..., 9.8, 14.1, ..., 14.4) avec sa section de surface (10.1, ..., 10.8) est déplaçable le long d'un chemin par rapport aux autres desdites au moins deux sections de surface (10.1, ..., 10.8, 11), dans lequel ledit chemin est orienté dans une direction essentiellement verticale.

2. Support (1) selon la revendication 1, **caractérisé en ce qu'**un ou plusieurs desdits au moins un élément de support (9.1, ..., 9.8, 14.1, ..., 14.4) est (sont) monté(s) de façon déplaçable sur ladite structure de support (7).

3. Support (1) selon la revendication 1 ou 2, **caractérisé en ce qu'**un ou plusieurs desdits au moins un élément de support (9.1, ..., 9.8, 14.1, ..., 14.4) est (sont) déplaçable(s) par rapport à ladite structure de support (7).

4. Support selon la revendication 1 ou 2, **caractérisé en ce qu'**un ou plusieurs desdits au moins un élément de support comprend(-nnent) un rabat.

5. Support (1) selon l'une des revendications 1 à 4, **caractérisé en ce que** ledit au moins un élément de support (9.1, ..., 9.8, 14.1, ..., 14.4) est situé à une première extrémité dudit chemin lorsque ledit support (1) est agencé dans une orientation de travail dans laquelle ladite surface de support (2) est orientée vers le haut de telle sorte que ledit pneu cru puisse être placé sur la surface de support (2) et maintenu sur ladite surface de support (2) par l'action d'une force gravitationnelle.

6. Support (1) selon la revendication 5, **caractérisé en ce que** ladite section de surface (10.1, ..., 10.8, 11) dudit au moins un élément de support (9.1, ..., 9.8, 14.1, ..., 14.4) est située à une première position si ledit au moins un élément de support (9.1, ..., 9.8, 14.1, ..., 14.4) est situé à ladite première extrémité dudit chemin, et **en ce que** ladite section de surface (10.1, ..., 10.8, 11) dudit au moins un élément de support (9.1, ..., 9.8, 14.1, ..., 14.4) est située au-dessus de ladite première position si ledit au moins un élément de support (9.1, ..., 9.8, 14.1, ..., 14.4) est déplacé à l'écart de ladite première extrémité dudit chemin.

7. Support (1) selon la revendication 5 ou 6, **caractérisé en ce que** ledit support (1) comprend un premier élément d'arrêt (12.1, ..., 12.8) agencé de manière à arrêter un déplacement d'un ou plusieurs desdits au moins un élément de support (9.1, ..., 9.8, 14.1, ..., 14.4) à ladite première extrémité dudit chemin.

8. Support (1) selon la revendication 7, **caractérisé en ce que** ledit support (1) comprend un second élément d'arrêt (13.1, 13.2, 13.3) agencé de manière à arrêter un déplacement d'un ou plusieurs desdits au moins un élément de support (9.1, ..., 9.8, 14.1, ..., 14.4) à une seconde extrémité dudit chemin.

9. Support (1) selon l'une des revendications 5 à 8, **caractérisé en ce qu'**un ou plusieurs desdits au moins un élément de support (9.1, ..., 9.8, 14.1, ..., 14.4) est (sont) poussé(s) par un élément élastique en direction de ladite première extrémité dudit chemin.

10. Support (1) selon l'une des revendications 1 à 9, **caractérisé en ce que** ledit support (1) comprend deux ou plus de deux desdits au moins un élément de support (9.1, ..., 9.8, 14.1, ..., 14.4).

11. Support (1) selon la revendication 10, **caractérisé en ce que** deux ou plus de deux desdits deux ou plus de deux éléments de support (9.1, ..., 9.8, 14.1, ..., 14.4) sont connectés l'un à l'autre de telle sorte qu'ils soient déplaçables le long dudit chemin.

12. Support (1) selon la revendication 10 ou 11, **caractérisé en ce qu'**un ou plusieurs desdits deux ou plus de deux éléments de support (9.1, 9.3, 9.5, 9.7) appartient(-ennent) à un premier ensemble d'éléments de support (9.1, 9.3, 9.5, 9.7) et est (sont) déplaçable(s) le long d'un premier chemin présentant une première longueur, et **en ce qu'**un ou plusieurs desdits deux ou plus de deux éléments de support (14.1, ..., 14.4) appartient(-ennent) à un second ensemble d'éléments de support (14.1, ..., 14.4) et est (sont) déplaçable(s) le long d'un second chemin présentant une seconde longueur.

13. Support (1) selon l'une des revendications 1 à 12, **caractérisé en ce qu'**au moins une section de surface (11) desdites au moins deux sections de surface (10.1, ..., 10.8, 11) est fixée à la structure de support (7).
